(19) Europäisches Patentamt
European Patent Office
Office européen des brevets

(11) EP 1 449 885 B1

(12) FASCICULE DE BREVET EUROPEEN

(45) Date de publication et mention de la délivrance du brevet:
**02.10.2013 Bulletin 2013/40**

(21) Numéro de dépôt: **04290391.4**

(22) Date de dépôt: **13.02.2004**

(51) Int Cl.:
***C08L 77/00*** (2006.01) ***C08L 23/02*** (2006.01)
***C08K 7/06*** (2006.01) ***C08K 7/24*** (2006.01)
***B32B 1/08*** (2006.01) ***B32B 27/34*** (2006.01)
***F16L 11/04*** (2006.01)

# (54) Utilisation de nanotubes de carbone dans des mélanges de polyamide et de polyoléfine

Verwendung von Kohlenstoffnanoröhren in Zusammensetzungen aus Polyamiden und Polyolefinen

Use of carbon nanotubes in compositions based on polyamides and polyolefins

(84) Etats contractants désignés:
**AT BE BG CH CY CZ DE DK EE ES FI FR GB GR HU IE IT LI LU MC NL PT RO SE SI SK TR**

(30) Priorité: **18.02.2003 FR 0301933**

(43) Date de publication de la demande:
**25.08.2004 Bulletin 2004/35**

(73) Titulaire: **ARKEMA FRANCE**
**92700 Colombes (FR)**

(72) Inventeur: **Brule, Benoît**
**27300 Bernay (FR)**

(74) Mandataire: **Delprat, Corinne et al**
**ARKEMA FRANCE**
**Département Propriété Industrielle**
**420, rue d'Estienne d'Orves**
**92705 Colombes Cedex (FR)**

(56) Documents cités:
**EP-A1- 1 036 968** **EP-A1- 1 162 061**
**EP-A1- 1 182 345** **EP-B1- 0 755 493**
**US-A- 6 090 459** **US-A1- 2002 183 438**
**US-B1- 6 299 812** **US-B1- 6 331 265**

- **MILLER B: "Tiny Graphite 'tubes' create high efficiency plastics", PLASTICS WORLD, CAHNERS PUBL., BOSTON, US, 1 September 1996 (1996-09-01), pages 1-4, XP002989978, ISSN: 0032-1273**
- **RICH A ET AL: "Nanotubes for conductive plastics Move to the next performance level", SAE TECHNICAL PAPER SERIES, SOCIETY OF AUTOMOTIVE ENGINEERS, WARRENDALE, PA, US, no. 2002-01-1037, 1 January 2002 (2002-01-01), pages 1-7, XP002989980, ISSN: 0148-7191**
- **GM ENGINEERING STANDARDS EUROPE TEST SPECIFICATION / PRÜFVORSCHRIFT GME 08100 (11/97)**

**EP 1 449 885 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### *[Domaine de l'invention]*

La présente invention concerne l'utilisation de nanotubes de carbone dans au moins une couche d'une structure, ladite couche étant formée à partir d'un mélange de polyamide et de polyoléfine. Cette structure peut être un tube mono ou multicouche pour le transfert de fluides.

A titre d'exemple de tubes pour le transfert de fluide on peut citer les tubes pour l'essence, et en particulier pour amener l'essence du réservoir jusqu'au moteur des automobiles. A titre d'autres exemples de transfert de fluide on peut citer les fluides mis en oeuvre dans la fuel cell (pile à combustible), le système à CO2 pour le refroidissement et l'air conditionné, les systèmes hydrauliques, le circuit de refroidissement, l'air conditionné et les transferts de puissance à moyenne pression.

Pour des raisons de sécurité et de préservation de l'environnement les constructeurs d'automobiles imposent à ces tubes à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur.

Dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de rendre conducteur la surface intérieure du tube en contact avec l'essence.

Ces tubes sont fabriqués par coextrusion des différentes couches selon les techniques habituelles des thermoplastiques.

On a découvert que l'utilisation de mélanges de polyamide et de polyoléfine contenant des nanotubes de carbone permettait d'obtenir à la fois de bonnes propriétés barrière et des propriétés antistatiques.

### *[L'art antérieur et le problème technique]*

Le brevet EP 470606 décrit des tubes ayant une couche de polyamide antistatique. Cette couche antistatique est constituée de polyamide chargé de 20% en poids de noir de carbone. On obtient bien une couche antistatique cependant l'incorporation de 20% de noir de carbone provoque une augmentation du module de flexion du polyamide et le tube ne passe plus les tests de choc.

L'avantage des nanotubes de carbone est qu'il suffit d'en mettre 2 à 6% en poids dans le polyamide pour le rendre antistatique et qu'à cette teneur le polyamide conserve ses propriétés mécaniques. En particulier un tube comprenant cette couche n'est pas fragilisé et passe les tests de choc. Le brevet US 6090459 décrit des tubes comprenant des couches de polyamide 12 et/ou de PVDF et comprenant aussi une couche de PA 12 ou de PVDF antistatique. Ces couches antistatiques sont obtenues par incorporation de dans le PA 12 ou le PVDF de fibres de graphite cristallin de diamètre de l'ordre de 10 nanomètres. La proportion de ces fibres dans le PA 12 ou le PVDF est entre 3 et 5% en poids.

Cette solution est un avantage technique par rapport à l'art antérieur précédent EP 470606 cependant le coût de ces fibres est élevé. On a maintenant trouvé que dans les mélanges de polyamide, de polyoléfine et de nanotubes de carbone, ces derniers se concentrent dans le polyamide. Ainsi un mélange de polyamide, de polyoléfine et de nanotubes de carbone à matrice polyamide a les mêmes propriétés antistatiques qu'un mélange de polyamide et de nanotubes de carbone mais en contient beaucoup moins, il est donc plus économique. De plus ces mélanges de polyamide, de polyoléfine et de nanotubes de carbone sont beaucoup plus barrière aux essences alcoolisées que les mélanges de polyamide et de polyoléfine ne contenant pas de nanotubes de carbone.

### *[Brève description de l'invention]*

La présente invention concerne l'utilisation de nanotubes de carbone dans au moins une couche d'une structure, ladite couche étant formée à partir d'un mélange de polyamide (A) et de polyoléfine (B) pour améliorer les propriétés barrière aux essences alcoolisées de ladite structure.

Avantageusement la proportion de nanotubes de carbone est suffisante pour que la resistivité surfacique soit de l'ordre de $10^6$ à $10^7 \Omega$.

L'invention concerne aussi l'utilisation d'une structure comprenant au moins une couche de ce mélange et éventuellement au moins une couche d'un autre matériau. Ces structures peuvent se mettre sous forme de bouteilles, réservoirs, conteneurs, tuyaux et récipients de toute sorte. Ces structures peuvent être fabriquées selon les techniques habituelles des thermoplastiques telles que l'injection, l'extrusion soufflage et la coextrusion.

La présente invention, selon une forme particulière, concerne l'utilisation d'un tube multicouche comprenant dans sa direction radiale de l'extérieur vers l'intérieur :

- une couche extérieure (1) formée d'un polyamide choisi parmi le PA 11 et le PA 12,
- une couche (2) formée d'un liant,
- une couche éventuelle (3) formée d'un EVOH,
- éventuellement une couche de liant (n'existe pas si la couche (3) n'est pas présente),
- une couche intérieure (4), ladite couche intérieure (4) étant formée du mélange de polyamide (A) et de polyoléfine (B), ce mélange étant à matrice polyamide et contenant les nanotubes de carbone,
- les couches étant successives et adhérant entre-elles dans leur zone de contact respective.

Selon une variante, la couche (4) est remplacée par une couche (4bis) et une couche (5) telles que :

- la couche (4 bis) est formée de polyamide (A1) ou d'un mélange de polyamide (A) et de polyoléfine (B) à matrice polyamide et ne contient pas de nanotubes de carbone,
- la couche (5) est disposée à l'intérieur du tube et est formée du mélange de polyamide (A) et de polyoléfine (B) à matrice polyamide et contient les nanotubes de carbone,
- une couche éventuelle de liant étant disposée entre les couches (4 bis) et (5).

C'est- à- dire que, selon cette variante, l'invention concerne l'utilisation d'un tube multicouche comprenant dans sa direction radiale de l'extérieur vers l'intérieur :

- une couche extérieure (1) formée d'un polyamide choisi parmi le PA 11 et le PA 12,
- une couche (2) formée d'un liant,
- une couche éventuelle (3) formée d'un EVOH,
- éventuellement une couche de liant (n'existe pas si la couche (3) n'est pas présente),
- une couche (4 bis) formée de polyamide (A1) ou d'un mélange de polyamide (A) et de polyoléfine (B) à matrice polyamide et ne contenant pas de nanotubes de carbone,
- éventuellement une couche de liant,
- une couche (5) disposée à l'intérieur du tube et formée du mélange de polyamide (A) et de polyoléfine (B) à matrice polyamide et contenant les nanotubes de carbone,
- les couches étant successives et adhérant entre-elles dans leur zone de contact respective.

Avantageusement la proportion de nanotubes de carbone est suffisante pour que la résistivité surfacique de la couche intérieure (la couche en contact avec le fluide transporté) des tubes soit de l'ordre de $10^6$ à $10^7\Omega$.

***[Description détaillée de l'invention]***

S'agissant du mélange de polyamide (A) et de polyoléfine (B) contenant des nanotubes de carbone on entend par polyamide les produits de condensation :

- d'un ou plusieurs aminoacides, tels les acides aminocaproïques, amino- 7- heptanoïque, amino- 11- undécanoïque et amino- 12- dodécanoïque ou d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le $\beta$, $\beta$- diméthylpropriolactame, le $\alpha$, $\alpha$- diméthylpropriolactame, l'amylolactame, le caprolactame, le capryllactame et le lauryllactame.

A titre d'exemple d'acide alpha oméga aminocarboxylique on peut citer l'acide amino- undécanoïque et l'acide

aminododécanoïque. A titre d'exemple d'acide dicarboxylique on peut citer l'acide adipique, l'acide sébacique, l'acide isophtalique, l'acide butanedioïque, l'acide 1, 4 cyclohexyldicarboxylique, l'acide téréphtalique, le sel de sodium ou de lithium de l'acide sulphoisophtalique, les acides gras dimérisés (ces acides gras dimérisés ont une teneur en dimère d'au moins 98% et sont de préférence hydrogénés) et l'acide dodécanédioïque HOOC- $(CH_2)_{10}$- COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1, 5 diaminohexane, le 2, 2, 4- triméthyl-1, 6- diamino- hexane, les polyols diamine, l'isophorone diamine (IPD), le méthyl pentaméthylènediamine (MPDM), la bis (aminocyclohéxyl) méthane (BACM), la bis (3- méthyl- 4 aminocyclohéxyl) méthane (BMACM) .

A titre d'exemples de copolyamides on peut citer des copolymères de caprolactame et de lauryl lactame (PA 6/12), des copolymères de caprolactame, d'acide adipique et d'hexaméthylène diamine (PA 6/6- 6), des copolymères de caprolactame, de lauryle lactame, d'acide adipique et d'hexaméthylène diamine (PA 6/12/6- 6), des copolymères de caprolactame, de lauryle lactame, d'acide amino 11 undécanoïque, d'acide azélaïque et d'hexaméthylène diamine (PA 6/6- 9/11/12), des copolymères de caprolactame, de lauryle lactame, d'acide amino 11 undécanoïque, d'acide adipique et d'hexaméthylène diamine (PA 6/6- 6/11/12), des copolymères de lauryle lactame, d'acide azélaïque et d'hexaméthylène diamine (PA 6- 9/12) .

Avantageusement le copolyamide est choisi parmi le PA 6 / 12 et le PA 6 / 6-6.

On peut utiliser des mélanges de polyamide. Avantageusement la viscosité relative des polyamides, mesurée en solution à 1% dans l'acide sulfurique à 20°C, est comprise entre 1,5 et 5.

On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamide et blocs polyether.

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inhérente entre 0,8 et 2,5 mesurée dans le métacrésol à 25°C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475,

US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple les mélanges de (i) PA 6 et (ii) copolymère à blocs PA 6 et blocs PTMG et des mélanges de (i) PA 6 et (ii) copolymère à blocs PA 12 et blocs PTMG.

On utilise avantageusement le PA 6, le PA 6-6 et le PA 6/6-6.

**Quant à la polyoléfine (B) du mélange de polyamide (A) et de polyoléfine (B)** elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères de l'éthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène.
- les homopolymères ou copolymères du propylène.
- les copolymères éthylène/ alpha- oléfine tels qu'éthylène/ propylène, les EPR (abréviation d'éthylène- propylene-rubber) et éthylène/ propylène/diène (EPDM) .
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth) acrylate de glycidyle, ou par des acides carboxyliques ou les sels ou esters correspondants tels que l'acide (méth) acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/ alpha- oléfine tels qu'éthylène/ propylène, les EPR (abréviation d'éthylène- propylene-rubber) et éthylène/ propylène/diène (EPDM) .
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/ propylène majoritaires en propylène greffés par de l'anhydride maléique puis condensés avec du polyamide (ou un oligomère de polyamide) mono aminé (produits décrits dans EP- A- 0342066) .

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;

- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth) acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n- butyle, l'acrylate d'iso butyle, l'acrylate d'éthyl- 2- hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du propylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader®de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI de (A), les MFI de (B1) et (B2) peuvent être choisis dans une large plage il est cependant recommandé pour faciliter la dispersion de (B) que le MFI de (A) soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi n'utiliser qu'un mélange de polyoléfines (B1) pour obtenir une réticulation.

Avantageusement le mélange de polyamide (A) et de polyoléfine (B) contenant les nanotubes de carbone est à matrice polyamide. Habituellement il suffit que la proportion de polyamide du mélange de polyamide (A) et de polyoléfine (B) contenant les nanotubes de carbone soit d'au moins 40% en poids et de préférence entre 40 et 75% pour qu'il y ait une matrice polyamide. C'est le cas des trois premières formes preférées du mélange de polyamide et de polyoléfine. Dans la quatrième forme préférée la phase de polyoléfine est réticulée ce qui assure qu'il n'y a pas inversion de phase et qu'on reste en matrice polyamide.

**Selon une première forme préférée de l'invention** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé ou un anhydride d'acide carboxylique insaturé.

Selon une variante de cette première forme de l'invention la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé ou un anhydride d'acide carboxylique insaturé et (iii) un polymère (C'2) choisi parmi les élastomères, les polyéthylènes de très basse densité et les copolymères de l'éthylène.

**Selon une deuxième forme préférée de l'invention** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée de l'invention** la polyoléfine (B) comprend (i) un polyéthylène de type EVA, LLDPE, VLDPE ou metallocene et (ii) un copolymère éthylène- (meth) acrylate d'alkyle- anhydride maléique.

**Selon une quatrième forme preférée de l'invention** la polyoléfine comprend deux polymères fonctionnalisés

comprenant au moins 50 % en moles de motifs éthylène et pouvant réagir pour former une phase réticulée. Selon une variante le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**S'agissant de la première forme** les proportions sont avantageusement les suivantes (en poids) :

60 à 70 % de polyamide,
5 à 15 % du mélange de (C1) et (C2) cogreffé

le complément en polyéthylène haute densité.
S'agissant du polyéthylène haute densité sa densité est avantageusement comprise entre 0,940 et 0,965 et le MFI entre 0.1 et 5 g/10 min. (190°C 2,16 kg).

Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex- 4- ène-1, 2- dicarboxylique, 4- méthyl- cyclohex- 4- ène- 1, 2- dicarboxylique, bicyclo (2, 2, 1)- hept- 5- ène- 2, 3- dicarboxylique, x- méthylbicyclo (2, 2, 1)- hept- 5- ène- 2, 3- dicarboxylique, les anhydrides maléique, itaconique, citraconique, allylsuccinique, cyclohex- 4- ène- 1, 2- dicarboxylique, 4- méthylènecyclohex- 4- ène- 1, 2- dicarboxylique, bicyclo (2, 2, 1) hept-5- ène- 2, 3- dicarboxylique, et x- méthylbicyclo (2, 2, 1) hept- 5- ène- 2, 2- dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/ 10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

S'agissant de la variante de la première forme les proportions sont avantageusement les suivantes (en poids) :

60 à 70 % de polyamide,
5 à 10 % de (C2) greffé,
5 à 10 % de (C'2)

le complément en polyéthylène haute densité.
(C2) est avantageusement un EPR ou un EPDM, (C'2) est avantageusement un EPR contenant en poids 70 à 75% d'éthylène.

**S'agissant de la deuxième forme de l'invention** les proportions sont avantageusement les suivantes (en

poids) :

60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth) acrylique, l'anhydride maléique et les epoxydes insaturés tels que le (méth) acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles) . Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA- 6, le PA- 11, le PA 12, le copolyamide à motifs 6 et motifs 12 (PA- 6/12), et le copolyamide à base de caprolactame, hexaméthylènediamine et acide adipique (PA- 6/6.6) . Les polyamides ou oligomères (C4) peuvent être à terminaisons acides, amine ou monoamine. Pour que le polyamide ait une terminaison monoamine il suffit d'utiliser un limiteur de chaîne de formule

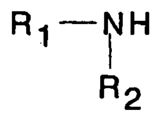

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de (C4) dans (C3) + (C4) en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,
5 à 15 % d'un copolymère éthylène- (meth) acrylate d'alkyle- anhydride maléique.

le complément est un polyéthylène de type EVA, LLDPE , VLDPE ou metallocene; avantageusement la densité du polyethylene LLDPE, VLDPE ou métallocene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :

35 à 95 % de polyamide,

65 à 5 % d'un mélange d'un copolymère éthylène- (meth) acrylate d'alkyle- anhydride maléique et d'un copolymère éthylène- (meth) acrylate d'alkyle- methacrylate de glycidyle.

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

Le copolymère éthylène/(méth)acrylate d'alkyle/ méthacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :

- des amines tertiaires telles que la diméthyllaurylamine, la diméthylstéarylamine, la N- butylmorpholine, la N, N-diméthylcyclohexylamine, la benzyldiméthylamine, la pyridine, la diméthylamino- 4- pyridine, le méthyl- 1- imidazole, la tétraméthyléthylhydrazine, la N, N- diméthylpipérazine, la N, N, N', N'- tétraméthyl- 1, 6- hexanediamine, un mélange d'amines tertiaires ayant de 16 à 18 carbones et connues sous l'appellation de diméthylsuifamine,
- des phosphines tertiaires telles que la triphénylphosphine
- des alkyldithiocarbamates de zinc.
- des acides.

On ne sortirait pas du cadre de l'invention si une partie du copolymère éthylène- (meth) acrylate d'alkyle- anhydride maleique est remplacée par un copolymère éthylène- acide acrylique ou un copolymère éthylène- anhydride maleique l'anhydride maleique ayant été en tout ou partie hydrolysé. Ces copolymères peuvent aussi comprendre un (meth) acrylate d'alkyle. cette partie peut representer jusqu'à 30% du copolymère éthylène- (meth) acrylate d'alkyle- anhydride maleique.

**S'agissant des nanotubes de carbone** on désigne ainsi des tubes ou des fibres creuses de diamètre de l'ordre 5 à 20 nanomètres (nm) et de longueur de l'ordre de 100 à 1000 fois le diamètre.

Le carbone possède trois formes allotropiques bien connues: le carbone amorphe, le graphite et le diamant. Le graphite se retrouve dans les fibres de carbone, très légères et résistantes. Le diamant est couramment utilisé pour ses propriétés mécaniques exceptionnelles, et pour sa forte conductivité thermique. Les nanotubes de carbone, nouvelle forme allotropique du carbone, sont considérés comme une espèce unique de systèmes carbonés situés à mi-chemin entre les fibres de carbone classiques et les nouvelles formes du carbone telles que les fullerènes. Leur rapport longueur sur diamètre est si grand qu'ils peuvent être considérés, à l'égard de certaines propriétés, comme des structures unidimensionnelles. Il existe deux types de nanotubes de carbone : les monofeuillets et les multifeuillets.

Diamètre : quelques nanomètres pour les monofeuillets et de l'ordre de 10 à quelques dizaines de nanomètres pour les multifeuillets.
Longueur: plusieurs micromètres

Un nanotube de carbone monofeuillet, dans le cas où il est parfait, peut être défini comme un feuillet de graphène enroulé et refermé sur lui-même formant ainsi un cylindre constitué uniquement d'atomes de carbone. Les extrémités sont formées de deux demi-sphères carbonées.

Un nanotube multifeuillet est un empilement concentrique de nanotubes monofeuillets.

Ces nanotubes peuvent être fabriqués selon deux méthodes. Les méthodes physiques consistent à sublimer une anode de graphite, en présence de conditions spéciales (pression contrôlée, présence d'un catalyseur et d'un gaz spécifique dans l'enceinte...). L'énergie nécessaire à la sublimation peut être fournie sous plusieurs formes : courant, laser, énergie solaire... La méthode la plus répandue à l'heure actuelle est celle de l'arc électrique qui consiste à appliquer une tension pour sublimer un barreau contenant du graphite et des particules de catalyseurs métalliques. Cette méthode permet à l'heure actuelle de produire des quantités relativement importantes de matériaux d'une très bonne qualité structurale (les propriétés mécaniques, électriques et thermiques du matériau sont donc très bonnes). Cependant, des impuretés carbonées et métalliques demeurent entre les faisceaux de nanotubes de carbone. Ces impuretés peuvent

être supprimées par des processus de purification.

Les méthodes chimiques ou douces consistent à décomposer un gaz d'hydrocarbures sur des molécules métalliques. Ce procédé permet d'obtenir des quantités plus importantes de nanotubes, mais avec un taux de défauts plus important. Par conséquent les propriétés sont habituellement moins importantes que pour des nanotubes par la méthode de l'arc électrique.

On peut utiliser par exemple les nanotubes fabriqués par Hyperion Catalysis International® et décrits dans Plastics Additives and Compounding, Sept 01, Volume 3, issue 9, ISSN 1464-391 X (Elsevier).

S'agissant de la proportion de nanotubes de carbone dans le mélange de polyamide et de polyoléfine elle peut être quelconque. Plus cette proportion est élevée meilleures sont les propriétés barrière et antistatiques. Avantageusement cette proportion est comprise entre 0,1 et 10% en poids pour respectivement 99,9 à 90% du mélange de polyamide et de polyoléfine. Plus avantageusement cette proportion est comprise entre 1 et 7% en poids pour respectivement 99 à 93% du mélange de polyamide et de polyoléfine. De préférence cette proportion est comprise entre 2 et 6% en poids pour respectivement 98 à 94% du mélange de polyamide et de polyoléfine. On ne sortirait pas du cadre de l'invention en utilisant un mélange de nanotubes de carbone.

Le mélange de polyamide (A) et de polyoléfine (B) peut renfermer en outre au moins un additif choisi parmi :

- les colorants ;
- les pigments ;
- les azurants ;
- les anti-oxydants ;
- les stabilisants UV.

De telles compositions sont préparées soit par mélange de tous les ingrédients (A, B, nanotubes et additif éventuel) dans un procédé dit « en direct », soit en ajoutant les nanotubes et l'additif éventuel au mélange A/B déjà préparé, soit encore en mélangeant un polyamide (A) contenant déjà des nanotubes avec une polyoléfine (B) ou toute combinaison de ces possibilités.

On utilise avantageusement les dispositifs habituels de mélange et de malaxage de l'industrie des thermoplastiques tels que les extrudeuses et les malaxeurs, par exemple les co-malaxeurs BUSS®.

X La présente invention, selon une forme particulière, concerne l'utilisation d'un tube multicouche comprenant dans sa direction radiale de l'extérieur vers l'intérieur : une couche extérieure (1) formée d'un polyamide choisi parmi le PA 11 et le PA 12,
une couche (2) formée d'un liant,
une couche éventuelle (3) formée d'un EVOH,
éventuellement une couche de liant (n'existe pas si la couche (3) n'est pas présente),
une couche intérieure (4), ladite couche intérieure (4) étant formée du mélange de polyamide (A) et de polyoléfine (B), ce mélange étant à matrice polyamide et contenant les nanotubes de carbone, les couches étant successives et adhérant entre-elles dans leur zone de contact respective.

**S'agissant de la couche extérieure (1)** en PA 11 ou en PA 12 ces polyamides ont avantageusement une masse moléculaire moyenne en nombre $\overline{Mn}$ en général supérieure ou égale à 5000. Leur viscosité inhérente (mesurée à 20°C pour un échantillon de 0,5 g dans 100 g de méta-crésol) est en général supérieure à 0,7.

Avantageusement ce polyamide de la couche extérieure est plastifié par des plastifiants usuels tels que le N-butyl benzène sulfonamide (BBSA) et les copolymères comprenant des blocs polyamides et des blocs polyéthers. Ces copolymères comprenant des blocs polyamides et des blocs polyéthers ont déjà été décrits plus haut dans le paragraphe concernant le polyamide (A).

**S'agissant de la couche de liant (2)** on définit ainsi tout produit qui permet une bonne adhésion entre les couches concernées. Le liant est choisi avantageusement parmi les polyoléfines fonctionnalisées et les copolyamides.

**A titre d'exemple de liant à base de polyoléfines fonctionnalisées** on peut citer :

le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique, ou des mélanges de ces polymères greffés et de ces polymères non greffés,
les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

**Quant aux liants du type copolyamides** utilisables dans la présente invention ils ont une température de

fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux de la couche extérieure et de la couche intérieure.

Les copolyamides proviennent, par exemple, de la condensation d'acides alpha-oméga aminocarboxyliques de lactames ou de diacides carboxylique

**Selon un premier type les copolyamides** résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le laurolactame (2- Azacyclotridécanone) .

**Selon un deuxième type les copolyamides** résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis (aminocyclohéxyl) méthane (BACM), la bis (3- méthyl- 4 aminocyclohéxyl) méthane (BMACM) .

Les procédés de fabrication des copolyamides sont connus de l'art antérieur et ces copolyamides peuvent être fabriqués par polycondensation, par exemple en autoclave.

**Selon un troisième type les copolyamides** sont un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 12 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

Si la couche extérieure est en PA 11 on préfère que le liant entre cette couche de PA 11 et la couche d'EVOH (ou entre la couche de PA 11 et la couche (4)) soit à base de polyoléfines fonctionnalisées. Si la couche extérieure est en PA 12 on préfère que le liant entre cette couche de PA 12 et la couche d'EVOH (ou entre la couche de PA 12 et la couche (4)) soit à base de copolyamide.

**S'agissant de la couche éventuelle (3) formée d'un EVOH**, elle peut être constituée d'EVOH ou de mélange à base d'EVOH. l'EVOH est aussi appelé copolymère éthylène-acétate de vinyle saponifié. Le copolymère éthylène-acétate de vinyle saponifié à employer selon la présente invention est un copolymère ayant une teneur en éthylène de 20 à 70 % en moles, de préférence de 25 à 70 % en moles, le degré de saponification de son composant acétate de vinyle n'étant pas inférieur à 95 % en moles. Avec une teneur en éthylène inférieure à 20 % en moles, les propriétés barrière dans des conditions de forte humidité ne sont pas aussi élevées qu'on le souhaiterait, tandis qu'une teneur en

éthylène dépassant 70 % en moles conduit à des baisses des propriétés barrière. Lorsque le degré de saponification ou d'hydrolyse est inférieur à 95 % en moles, les propriétés barrière sont sacrifiées.

On entend par propriétés barrière l'impermeabilité aux gaz, aux liquides et en particulier à l'oxygene, à l'essence pour les automobiles.

Parmi ces copolymères saponifiés, ceux qui ont des indices de fluidité à chaud dans l'intervalle de 0,5 à 100 g/10 minutes sont particulièrement utiles. Avantageusement le MFI est choisi entre 5 et 30 (g / 10min à 230°C sous 2,16 kg), "MFI" abréviation de "Melt Flow Index" désigne l'indice de fluidité à l'état fondu.

Il est entendu que ce copolymère saponifié peut contenir de faibles proportions d'autres ingrédients comonomères, y compris des $\alpha$-oléfines comme le propylène, l'isobutène, l'$\alpha$-octène, l'$\alpha$-dodécène, l'$\alpha$-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Quant aux mélanges à base d'EVOH ils sont tels que l'EVOH forme la matrice, c'est à dire qu'il représente au moins 40% en poids du mélange et de préférence au moins 50%. Les autres constituants du mélange sont choisis parmi les polyolefines, les polyamides et éventuellement des polymères fonctionnels.

**S'agissant de la couche éventuelle de liant entre les couches (3) et** (4) il peut être choisi parmi les liants cités pour la couche (2).

**S'agissant de la couche (4)** elle a déjà été décrite plus haut.

**Selon une variante**, la couche (4) est remplacée par une couche (4bis) et une couche (5) telles que :

- la couche (4 bis) est formée de polyamide (A1) ou d'un mélange de polyamide (A) et de polyoléfine (B) à matrice polyamide et ne contient pas de nanotubes de carbone,
- la couche (5) est disposée à l'intérieur du tube et est formée du mélange de polyamide (A) et de polyoléfine (B) à matrice polyamide et contient les nanotubes de carbone,
- une couche éventuelle de liant étant disposée entre les couches (4 bis) et (5).

Dans cette variante la couche (4 bis) peut être de la même composition que la couche (4) sauf qu'elle ne contient pas de nanotubes de carbone.

La couche (4 bis) peut aussi être en un autre polyamide (A1). (A1) peut être choisi parmi les polyamides cités dans la description des polyamides (A) du mélange de polyamide (A) et de polyoléfine (B). A titre d'exemple de (A1) on peut citer le PA 6, le PA 6-6 et le PA 6/6-6.

La couche (4 bis) peut être aussi en un mélange de polyamide et de polyoléfine différent de celui de la couche (4). Par exemple elle peut être en PA 6 contenant de l'EPR (ou de l'EPDM), l'EPR (ou l'EPDM) pouvant être greffé en partie ou en totalité par de l'anhydride maleique;

**Quant à la couche éventuelle de liant disposée entre les couches (4 bis)** et **(5)** il peut être choisi parmi les liants cités pour la couche (2).

Avantageusement, le tube utilisé selon l'invention a un diamètre extérieur allant de 6 à 12 mm, une épaisseur totale de 0, 41 mm à 1, 7 mm,
une épaisseur de 300 à 800 $\mu$m pour la couche extérieure (1) en polyamide 11 ou 12,
une épaisseur de 10 à 100 $\mu$m pour la couche (2) de liant,
une épaisseur de 10 à 200 um pour la couche éventuelle (3) en EVOH,
une épaisseur de 10 à 100 $\mu$m pour la couche éventuelle de liant,
une épaisseur de 100 à 500 $\mu$m pour la couche (4) formée d'un mélange de polyamide et de polyoléfine et de nanotubes de carbone.

Selon la variante dans laquelle la couche (4) est remplacée par une couche (4 bis) et une couche (5), la somme des épaisseurs des couches (4 bis), (5) et de la couche éventuelle de liant entre ces couches est comprise entre 100 et 500 $\mu$m.

De préférence les tubes pour relier le réservoir au système d'injection des automobiles ont un diamètre extérieur de 8 mm et une épaisseur de 1 mm.

Ces tubes multicouches peuvent être cylindriques de diamètre constant ou annelés.

De manière classique, ces tubes peuvent comporter des gaines de protection notamment en caoutchouc pour les protéger des points chauds du moteur.

***[Exemples]***

On a réalisé par compoundage en extrudeuse des mélanges de polyamide, de polyoléfine et de nanotubes de carbone selon l'invention. Puis sur des films de 150 $\mu$m d'épaisseur on a mesuré la perméabilité à l'essence (à 60°C).

On a utilisé les produits suivants:

**Orgalloy 1:** désigne un mélange de polyamide et de polyoléfine il est constitué, en poids, de :

25% d'un polyéthylène haute densité (HDPE),
10% d'un mélange d'un polyéthylène (C1) qui est un HDPE et d'un polymère (C2) qui est un EPR, le mélange (C1) + (C2) étant cogreffé par l'anhydride maleique,
65% de PA 6.

**Orgalloy 1+ 2% NTC** : mélange selon l'invention de 98% en poids d'orgalloy 1 et de 2% de nanotubes de carbone.
**Orgalloy 1+ 6% NTC** : mélange selon l'invention de 94% en poids d'orgalloy 1 et de 6% de nanotubes de carbone.
**NTC** : nanotubes de carbone fournis par Hyperion® Catalysis International de type multifeuillets et de diamètre 15 nanomètres.

Les résultats sont reportés sur le tableau 1

Tableau 1

| | Orgalloy 1 *Flux en g.mm/ m2.24h* | Orgalloy 1+ 2% NTC *Flux en g.mm/m2.24h* | Orgalloy 1+ 6% NTC *Flux en g.mm/m2.24h* |
|---|---|---|---|
| | | | |
| Méthanol | 136,2 | 104,0 | 87,3 |
| Toluène | 13,1 | 21,2 | 25,6 |
| Isooctane | 0,343 | 0,857 | 3,048 |
| M15 | *149,6* | *126,1* | *116,0* |

L'ajout de 6% de NTC entraîne une diminution de 22% de la perméabilité à l'essence M15. L'essence M 15 est constituée en volume de 15% de méthanol, de 42,5% de toluène et de 42,5% d'isooctane.
On notera cependant, que cette diminution est principalement liée à la réduction importante de la perméabilité au composant le plus léger et ayant le plus d'affinité avec l'orgalloy 1 (Méthanol); la perméabilité au Toluène et à l'Isooctane augmentant en fonction du taux de NTC dans l'orgalloy 1.
On a aussi mesuré la résistivité de surface en comparant l'orgalloy 1 1 avec un PA 6. Les résultats sont reportés sur la fig 1.
La résistivité superficielle ou surfacique est définie comme le quotient de l'intensité du champ électrique continu par la densité du courant linéaire dans une couche superficielle d'un matériau isolant. En pratique, la résistivité superficielle ρs est prise égale à la résistance superficielle **Rs** réduite à une surface carrée.

**Formule :**

$$\rho s\ (Ohms) = Rs\ (Ohms) \times \frac{l\ (cm)}{d\ (cm)}$$

Dans laquelle :

l : longueur des électrodes en regard
d : distance entre ces électrodes

**Résistivité superficielle sur plaque :**

Pour notre cellule de mesure l et d sont tels que:

l : périmètre de l'électrode gardée
d : distance entre électrode gardée et électrode de garde

l/d = 53,4

Par exemple avec Rs mesurée de $10^6$ Ohms on obtient ps = $10^6 \times 53{,}4$ = 53,4 $10^6$ Ohms.

**Résistivité superficielle sur tube :**

On effectue la mesure sur la couche intérieure de tubes de dimensions :

Ø : diamètre du tube de 0,6 cm
d : longueur du tube de 10 cm

Avec Rs mesurée de $10^6$ Ohms on obtient $\rho s = 10^6 \times (Ø\pi)/d = 0{,}18.10^6$ Ohms.

On a réalisé des tubes selon l'invention de diamètre intérieur 0,6 cm, d'épaisseur 1mm et comprenant successivement de l'extérieur vers l'intérieur des couches dans les matériaux suivants:

PA 12/ mélange de copolyamide 6/12 riche en 6 et de copolyamide 6/12 riche en 12/EVOH/Orgalloy 1/Orgalloy +NTC. Puis on a mesuré la résistivité de surface de la couche intérieure en utilisant la méthode précédente.

## Revendications

1. Utilisation de nanotubes de carbone dans au moins une couche d'une structure, ladite couche étant formée à partir d'un mélange de polyamide (A) et de polyoléfine (B), pour améliorer les propriétés barrière aux essences alcoolisées de ladite structure.

2. Utilisation selon la revendication 1, **caractérisée en ce que** le mélange de polyamide (A) et de polyoléfine (B) est à matrice polyamide.

3. Utilisation selon la revendication 1 ou 2, **caractérisée en ce que** les nanotubes de carbone sont des tubes ou des fibres creuses de diamètre de l'ordre de 5 à 20 nanomètres et de longueur de l'ordre de 100 à 1000 fois le diamètre.

4. Utilisation selon l'une quelconque des revendications 1 à 3, **caractérisée en ce que** la proportion de nanotubes de carbone est suffisante pour que la résistivité surfacique soit de l'ordre de $10^6$ à $10^7\Omega$.

5. Utilisation selon l'une quelconque des revendications 1 à 4, **caractérisée en ce que** la proportion de nanotubes de carbone est comprise entre 0,1 et 10% en poids, avantageusement entre 1 et 7% en poids, et de préférence entre 2 et 6% en poids, pour respectivement 99,9 à 90% en poids, avantageusement 99 à 93% en poids, et de préférence 98 à 94% en poids, du mélange de polyamide (A) et de polyoléfine (B).

6. Utilisation selon l'une quelconque des revendications 1 à 5, **caractérisée en ce que** le mélange de polyamide (A) et de polyoléfine (B) comprend en outre au moins un additif choisi parmi un colorant, un pigment, un azurant, un anti-oxydant et un stabilisant UV.

7. Utilisation selon l'une quelconque des revendications 1 à 6, **caractérisée en ce que** la structure est une bouteille, un réservoir, un conteneur, un tuyau, un récipient ou un tube monocouche pour le transfert de fluides.

8. Utilisation selon l'une quelconque des revendications 1 à 6, **caractérisée en ce que** la structure est un tube multicouche pour le transfert de fluides dans lequel ladite couche comprenant les nanotubes de carbone est la couche en contact avec le fluide transporté.

9. Utilisation selon la revendication 8, **caractérisée en ce que** le tube multicouche comprend dans sa direction radiale de l'extérieur vers l'intérieur :

   • une couche extérieure (1) formée d'un polyamide choisi parmi le PA 11 et le PA 12,
   • une couche (2) formée d'un liant,
   • une couche éventuelle (3) formée d'un EVOH,
   • éventuellement une couche de liant (n'existe pas si la couche (3) n'est pas présente),
   • ladite couche comprenant les nanotubes de carbone constituant la couche intérieure (4), ladite couche intérieure (4) étant à matrice polyamide,

les couches étant successives et adhérant entre-elles dans leur zone de contact respective.

**10.** Utilisation selon la revendication 9, **caractérisée en ce que** la couche intérieure (4) est remplacée par une couche (4bis) et une couche (5) telles que :

• la couche (4 bis) est formée de polyamide (A1) ou d'un mélange de polyamide (A) et de polyoléfine (B) à matrice polyamide et ne contient pas de nanotubes de carbone,
• ladite couche comprenant les nanotubes de carbone constituant la couche (5) disposée à l'intérieur du tube, ladite couche (5) étant à matrice polyamide,
• une couche éventuelle de liant étant disposée entre les couches (4 bis) et (5).

**Patentansprüche**

**1.** Verwendung von Kohlenstoffnanoröhrchen in mindestens einer Schicht mit einer Struktur, wobei die Schicht aus einem Gemisch aus Polyamid (A) und Polyolefin (B) gebildet wird, um die Barriereeigenschaften dieser Struktur gegenüber alkoholhaltigen Kraftstoffen zu verbessern.

**2.** Verwendung nach Anspruch 1, **dadurch gekennzeichnet, dass** das Gemisch aus Polyamid (A) und Polyolefin (B) eine Polyamidmatrix umfasst.

**3.** Verwendung nach Anspruch 1 oder 2, **dadurch gekennzeichnet, dass** die Kohlenstoffnanoröhrchen Röhrchen oder Hohlfasern mit einem Durchmesser in der Größenordnung von 5 bis 20 Nanometern und einer Länge in der Größenordnung des 100- bis 1.000-fachen des Durchmessers sind.

**4.** Verwendung nach einem der Ansprüche 1 bis 3, **dadurch gekennzeichnet, dass** der Anteil an Kohlenstoffnanoröhrchen ausreichend ist, damit der Oberflächenwiderstand in der Größenordnung von $10^6$ bis $10^7$ $\Omega$ liegt.

**5.** Verwendung nach einem der Ansprüche 1 bis 4, **dadurch gekennzeichnet, dass** der Anteil an Kohlenstoffnanoröhrchen im Bereich zwischen 0,1 und 10 Gew.-%, vorteilhafterweise zwischen 1 und 7 Gew.-% und bevorzugt zwischen 2 und 6 Gew.-% für jeweils 99,9 bis 90 Gew.-%, vorteilhafterweise 99 bis 93 Gew.-% bzw. bevorzugt 98 bis 94 Gew.-% des Gemischs aus Polyamid (A) und Polyolefin (B) liegt.

**6.** Verwendung nach einem der Ansprüche 1 bis 5, **dadurch gekennzeichnet, dass** das Gemisch aus Polyamid (A) und Polyolefin (B) ferner mindestens ein Additiv umfasst, ausgewählt aus einem Farbstoff, einem Pigment, einem Aufheller, einem Antioxidationsmittel und einem UV-Stabilisator.

**7.** Verwendung nach einem der Ansprüche 1 bis 6, **dadurch gekennzeichnet, dass** die Struktur eine Flasche, ein Tank, ein Container, ein Schlauch, ein Behälter oder ein einschichtiges Röhrchen für die Übertragung von Fluiden ist.

**8.** Verwendung nach einem der Ansprüche 1 bis 6, **dadurch gekennzeichnet, dass** die Struktur ein mehrschichtiges Röhrchen für die Übertragung von Fluiden ist, wobei die Schicht, die die Kohlenstoffnanoröhrchen umfasst, die Schicht ist, die mit dem transportierten Fluid in Kontakt ist.

**9.** Verwendung nach Anspruch 8, **dadurch gekennzeichnet, dass** das mehrschichtige Röhrchen in seiner radialen Richtung von außen nach innen Folgendes umfasst:

- eine äußere Schicht (1), gebildet aus einem Polyamid, ausgewählt aus PA 11 und PA 12,
- eine Schicht (2), gebildet aus einem Bindemittel,
- eine mögliche Schicht (3), gebildet aus einem EVOH,
- gegebenenfalls eine Bindemittelschicht (die es nicht gibt, wenn die Schicht (3) nicht vorhanden ist),
- wobei die Schicht, die die Kohlenstoffnanoröhrchen umfasst, die innere Schicht (4) darstellt, wobei die innere Schicht (4) eine Polyamidmatrix aufweist,

wobei die Schichten aufeinander folgen und in ihrer jeweiligen Kontaktzone aneinander haften.

10. Verwendung nach Anspruch 9, **dadurch gekennzeichnet, dass** die innere Schicht (4) durch eine Schicht (4a) und eine Schicht (5) ersetzt wird, so dass:

- die Schicht (4a) aus Polyamid (A1) oder einem Gemisch aus Polyamid (A) und Polyolefin (B), das eine Polyamidmatrix aufweist, gebildet wird und keine Kohlenstoffnanoröhrchen enthält,
- die Schicht, die die Kohlenstoffnanoröhrchen umfasst, die die Schicht (5) darstellt, im Innern des Röhrchens angeordnet ist, wobei die Schicht (5) eine Polyamidmatrix aufweist,
- eine mögliche Bindemittelschicht zwischen den Schichten (4a) und (5) angeordnet ist.

## Claims

1. Use of carbon nanotubes in at least one layer of a structure, the said layer being formed from a blend of polyamide (A) and polyolefin (B), in order to improve the barrier properties of the said structure to alcohol-comprising petrol.

2. Use according to Claim 1, **characterized in that** the blend of polyamide (A) and polyolefin (B) is with a polyamide matrix.

3. Use according to Claim 1 or 2, **characterized in that** carbon nanotubes are hollow tubes or fibres with a diameter of the order of 5 to 20 nanometers and with a length of the order of 100 to 1000 times the diameter.

4. Use according to any one of Claims 1 to 3, **characterized in that** the proportion of carbon nanotubes is sufficient for the surface resistivity to be of the order of $10^6$ to $10^7$ $\Omega$.

5. Use according to any one of Claims 1 to 4, **characterized in that** the proportion of carbon nanotubes is between 0.1% and 10% by weight, advantageously between 1% and 7% by weight and preferably between 2% and 6% by weight, for respectively from 99.9% to 90% by weight, advantageously from 99% to 93% by weight and preferably from 98% to 94% by weight, of the blend of polyamide (A) and polyolefin (B).

6. Use according to any one of Claims 1 to 5, **characterized in that** the blend of polyamide (A) and polyolefin (B) additionally comprises at least one additive chosen from a dye, a pigment, an optical brightener, an antioxidant and a UV stabilizer.

7. Use according to any one of Claims 1 to 6, **characterized in that** the structure is a bottle, a tank, a container, a pipe, a receptacle or a monolayer tube for the transfer of fluids.

8. Use according to any one of Claims 1 to 6, **characterized in that** the structure is a multilayer tube for the transfer of fluids in which the said layer comprising the carbon nanotubes is the layer in contact with the transported fluid.

9. Use according to Claim 8, **characterized in that** the multilayer tube comprises, in its radial direction from the outside towards the inside:

• an external layer (1) formed of a polyamide chosen from PA11 and PA12,
• a layer (2) formed of a tie,
• an optional layer (3) formed of an EVOH,
• optionally a tie layer (does not exist if the layer (3) is not present),
• the said layer comprising the carbon nanotubes constituting the internal layer (4), the said internal layer (4) being with a polyamide matrix,

the layers being successive and adhering to one another in their respective contact region.

10. Use according to Claim 9, **characterized in that** the internal layer (4) is replaced by a layer (4a) and a layer (5) such that:

• the layer (4a) is formed of polyamide (A1) or of a blend of polyamide (A) and polyolefin (B) with a polyamide matrix and does not comprise carbon nanotubes,
• the said layer comprising the carbon nanotubes constituting the layer (5) is positioned inside the tube, the said layer (5) being with a polyamide matrix,

• an optional tie layer is positioned between the layers (4a) and (5).

Figure 1

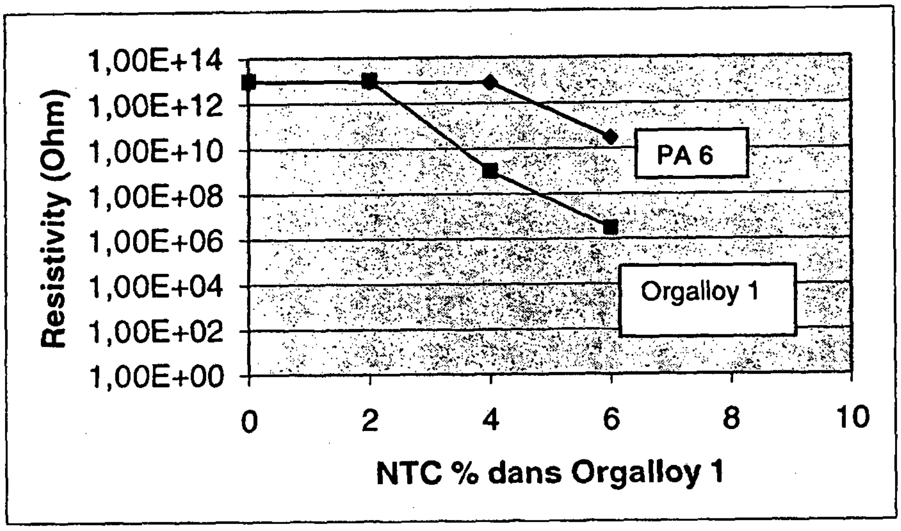
1,00E+14
1,00E+12
1,00E+10
1,00E+08
1,00E+06
1,00E+04
1,00E+02
1,00E+00
Resistivity (Ohm)
0
2
4
6
8
10
NTC % dans Orgalloy 1
PA 6
Orgalloy 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 470606 A
- US 6090459 A
- US 4331786 A
- US 4115475 A
- US 4195015 A
- US 4839441 A
- US 4864014 A
- US 4230838 A
- US 4332920 A
- EP 0342066 A
- EP 647681 A
- EP 342066 A
- FR 2291225
- US 4424864 A
- US 4483975 A
- US 4774139 A
- US 5459230 A
- US 5489667 A
- US 5750232 A
- US 5254641 A


### Littérature non-brevet citée dans la description


- Plastics Additives and Compounding. Elsevier, Septembre 2001, vol. 3